# DEMANDE DE BREVET EUROPEEN

(11) **EP 2 403 086 A1**
(43) Date de publication de la demande: **04.01.2012**
(21) Numéro de dépôt: 11354014.0
(22) Date de dépôt: 18.04.2011
(51) Int. Cl.: H02G 15/184, H01H 85/20, H01R 13/52

(54) **Dispositif de raccordement électrique d'un conducteur tel celui d'une traverse électrique appartenant à l'enveloppe isolante d'un appareil électrique de coupure à un conducteur tel un câble.**

(30) Priorité: 02.07.2010 FR 1002798
(71) Demandeur: Schneider Electric Industries SAS, 92500 Rueil-Malmaison (FR)
(72) Inventeur: Kersusan Jean-Pierre, 38050 Grenoble Cedex 9 (FR); Famy François, 38050 Grenoble Cedex 9 (FR); Milan Thierry, 38050 Grenoble Cedex 9 (FR)
(74) Mandataire: Colette, Marie-Françoise

(57) **Abrégé**

La présente invention concerne un dispositif de raccordement électrique du conducteur dit premier (1) d'une traversée électrique (2) appartenant à l'enveloppe isolante d'un appareil électrique de coupure, à un conducteur dit second (3) tel un câble ou un fusible, ladite traversée comprenant ledit second conducteur entouré au moins partiellement par une partie isolante, ledit dispositif comportant une interface de raccordement (8) pour réaliser la connexion électrique entre le premier (1) et le second conducteur (3) précités, et un déflecteur placé autour de l'interface de raccordement précité (8) et relié électriquement au conducteur (1) de la traversée (2). Ce dispositif est caractérisé en ce qu'il comporte un manchon isolant (9) comportant une partie principale (10) placée autour de l'interface de raccordement (8), une partie d'extrémité (11), dite première, montée à étanchéité autour de la partie isolante de la traversée et une partie d'extrémité (12), dite seconde, montée à étanchéité autour de l'extrémité du conducteur dit second (3), ladite partie principale (10) comportant sur au moins une partie de sa surface intérieure une portion conductrice (14a,14b) reliée électriquement audit premier conducteur (1).

## Description

La présente invention concerne un dispositif de raccordement électrique d'un conducteur électrique dit premier à un conducteur électrique dit second, ledit premier conducteur étant entouré au moins partiellement par une partie isolante, ledit dispositif comportant une interface de raccordement pour réaliser la connexion électrique entre le premier et le second conducteur précités, et un déflecteur placé autour de l'interface de raccordement précité et relié électriquement au conducteur dit premier.

Le raccordement électrique du conducteur d'une traversée appartenant à l'enveloppe d'un appareillage moyenne tension à un autre conducteur tel un câble ou un fusible est réalisé au moyen d'une interface de raccordement, laquelle a la particularité de présenter trois matériaux différents coïncidant en un point. Cette particularité rend cette zone particulièrement sensible aux champs électriques. La combinaison de ces contraintes avec d'autres contraintes telles la présence d'eau, et d'autres agents agressifs tels que des polluants contenus dans l'air rend cette zone encore plus sensible aux champs électriques. Les réalisations actuelles utilisent des déflecteurs classiques se limitant à la zone de raccordement électrique afin de masquer les angles vifs des conducteurs.

La présente invention a pour objet un dispositif de raccordement électrique de deux conducteurs, permettant d'améliorer la tenue diélectrique du compartiment comportant un tel dispositif, en particulier la tenue en cas de choc de foudre et la tenue en vieillissement dans des ambiances climatiques sévères (pollution, humidité, brouillard salin, etc...).

A cet effet, la présente invention a pour objet un dispositif de raccordement du genre précédemment mentionné, ce dispositif étant caractérisé en ce qu'il comporte un manchon isolant comportant une partie principale placée autour de l'interface de raccordement, une partie d'extrémité, dite première, montée à étanchéité autour de la partie isolante du premier conducteur et une partie d'extrémité, dite seconde, montée à étanchéité autour de l'extrémité du conducteur dit second, ladite partie principale comportant sur au moins une partie de sa surface intérieure une portion conductrice reliée électriquement audit premier conducteur.

Ainsi, un manchon-déflecteur manchonne l'interface de raccordement englobant les conducteurs sous tension, créant une étanchéité diélectrique dans les zones de raccordement.

Selon une caractéristique particulière, l'extrémité du conducteur dit second est recouverte sur une certaine longueur d'une terminaison isolante et la seconde partie d'extrémité du manchon précitée est montée à étanchéité autour de ladite terminaison.

Selon une autre caractéristique, l'extrémité libre de la seconde partie d'extrémité est fixée par frettage sur ladite terminaison.

Selon une autre caractéristique, le conducteur dit second comportant un écran de câble relié à la masse et s'arrêtant à une certaine distance de l'extrémité dudit conducteur, la seconde partie d'extrémité du manchon se prolonge de manière à manchonner la terminaison jusqu'à recouvrir en partie l'extrémité de l'écran de câble.

Selon une autre caractéristique, la portion conductrice précitée est réalisée au moyen d'une peinture conductrice placée sur au moins une partie de la surface intérieure de la partie principale du manchon.

Selon une autre réalisation, la portion conductrice précitée est réalisée au moyen d'un insert élastomère conducteur surmoulé par la matière isolante du manchon.

Selon une autre caractéristique, la seconde partie d'extrémité seule du manchon, ou bien l'ensemble constitué par la partie principale du manchon et la seconde partie d'extrémité du manchon, forme une partie retournable autour de la première partie d'extrémité du manchon. Ceci permet de réaliser un raccordement aisé des conducteurs.

Selon une autre caractéristique, la partie principale et/ou la seconde partie d'extrémité du manchon comporte des ailettes aptes à augmenter la ligne de fuite entre les parties sous tension et les parties à la masse.

Selon une autre caractéristique, la partie principale et /ou la seconde partie d'extrémité du manchon, comporte au moins une partie formée en accordéon, de manière à permettre une adaptation aisée du manchon par extension du soufflet à la longueur souhaitée de recouvrement du second conducteur ou à la longueur d'une terminaison isolante placée autour dudit conducteur.

Selon une réalisation particulière, le manchon est réalisé en une seule pièce.

Selon une autre réalisation, le manchon précité est réalisé en deux pièces comprenant une première pièce comportant la partie principale et la première partie d'extrémité du manchon, et la seconde pièce comportant la seconde partie d'extrémité du manchon.

Selon une autre caractéristique, la seconde pièce est fixée à la première par des moyens d'encliquetage ou de frettage de manière à augmenter l'étanchéité entre ces deux parties et entre le manchon et le câble.

Selon une autre caractéristique, ce dispositif comporte une rondelle solidaire du conducteur dit premier, ladite rondelle reliant électriquement la partie conductrice du manchon et ledit conducteur dit premier, et étant apte à permettre l'encliquetage du manchon lors du montage de ce manchon sur le conducteur dit premier.

Selon une autre caractéristique, le manchon comporte du côté du premier conducteur, une partie de préhension apte à faciliter le montage du manchon du côté du premier conducteur.

Selon une autre caractéristique, le conducteur dit second comportant un écran de câble relié à la masse et s'arrêtant à une certaine distance de l'extrémité dudit conducteur, ce dispositif est caractérisé en ce que le dispositif comporte également un déflecteur fixé par l'une de ses extrémités à l'extrémité libre de la seconde partie d'extrémité précitée du manchon par surmoulage, et s'appuie, par son extrémité opposée, sur la gaine de l'écran de câble précité.

Selon une caractéristique particulière, l'extrémité du conducteur dit second est recouverte sur une certaine longueur d'une terminaison isolante, et le manchon et la terminaison sont constitués d'une seule et même pièce.

Selon une autre caractéristique, le premier conducteur est celui d'une traversée appartenant à l'enveloppe isolante d'un appareil électrique de coupure et le second conducteur est celui d'un câble.

Selon une autre caractéristique, le premier conducteur est celui d'une extrémité d'un fusible et le second conducteur est celui d'un câble ou bien d'un fusible.

L'invention concerne également un dispositif de raccordement comprenant un premier dispositif de raccordement comportant les caractéristiques précédemment mentionnées prises seules ou en combinaison, dans lequel le premier conducteur est celui d'une traversée et le second conducteur est celui d'une extrémité d'un fusible, et un second dispositif de raccordement comportant les caractéristiques précédemment mentionnées prises seules ou en combinaison, dans lequel le premier conducteur est celui de l'autre extrémité du fusible et le second conducteur est celui d'un câble.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue partielle en coupe axiale, illustrant le dispositif de raccordement selon une première réalisation de l'invention,
- La figure 2 est une vue partielle en coupe axiale, illustrant le dispositif de raccordement selon une seconde et une troisième réalisation de l'invention, respectivement situées du côté gauche et du côté droit de la figure,
- La figure 3 est une vue partielle en coupe axiale, illustrant le dispositif de raccordement selon une quatrième réalisation de l'invention,
- La figure 4 est une vue partielle en coupe, illustrant la mise en contact de la tresse avec le déflecteur inférieur du manchon,
- La figure 5 est une vue partielle en coupe, illustrant la fixation de la tresse,
- La figure 6 est une vue partielle en coupe axiale, illustrant le dispositif de raccordement selon une cinquième réalisation de l'invention, et
- La figure 7 est une vue en coupe axiale illustrant un dispositif de raccordement selon l'invention destiné à réaliser le raccordement électrique en partie inférieure entre un fusible et un câble, ainsi qu'en partie supérieure entre une traversée d'un appareillage et un fusible.

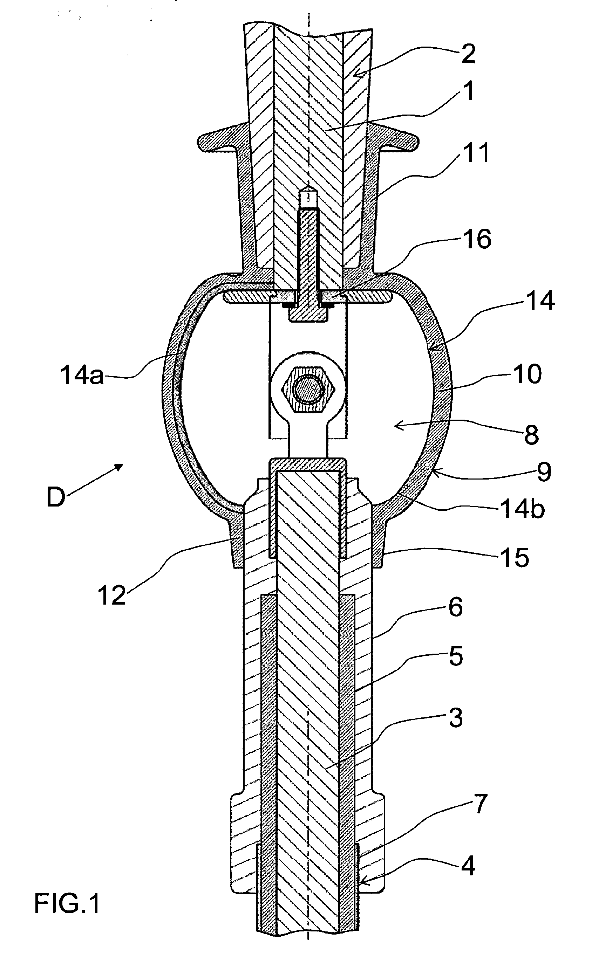

Sur la figure 1, on voit un dispositif de raccordement D selon une première réalisation de l'invention destiné à réaliser le raccordement d'un premier conducteur 1 logé dans une traversée 2 appartenant à l'enveloppe d'un appareillage électrique avec un second conducteur 3 sous la forme d'un câble électrique.

Ce câble est équipé d'un écran de câble 4 monté autour de la partie d'extrémité du conducteur dit second 3 mais sans aller jusqu'au bout de l'extrémité, laissant ainsi une partie d'extrémité 5 non recouverte par l'écran, ledit écran 4 étant relié électriquement à la masse.

Ce câble est également équipé d'une terminaison isolante 6 montée autour de la partie d'extrémité du câble et recouvrant une partie d'extrémité 7 de l'écran de câble 4. Les deux conducteurs précités 1,3 sont reliés électriquement et mécaniquement au moyen d'une interface de raccordement 8.

Selon l'invention, cette interface 8 est entourée d'un manchon en élastomère 9 comportant une partie principale 10 montée autour de l'interface 8, de part et d'autre de laquelle s'étendent deux parties d'extrémités 11,12 montées à étanchéité respectivement autour de la traversée 2 et autour de la terminaison 6. Ce manchon 9 comporte sur sa face intérieure un déflecteur 14. Cette figure illustre deux réalisations possibles de ce déflecteur, à savoir un déflecteur 14a sous la forme d'un insert en élastomère surmoulé, du côté gauche de la figure, et un déflecteur 14b constitué par une peinture conductrice du côté droit de la figure. Ce déflecteur 14 est relié électriquement au premier conducteur 1.

On notera que le matériau élastomère dont est constitué le manchon est un matériau élastomère conducteur identique ou bien compatible avec la partie isolante du manchon afin de faciliter l'adhérisation entre les deux éléments.

Selon cette réalisation, la seconde partie d'extrémité 12 ainsi que la partie principale 10 du manchon 9 sont retournables autour de la première partie d'extrémité 11.

Un anneau torique en matériau isolant fendu 15 est placé autour de la seconde partie d'extrémité 12 du manchon 9 de manière à améliorer la rigidité du serrage de ce manchon sur la terminaison et de ce fait l'étanchéité entre ce manchon 9 et la terminaison 6. A partir de ce niveau, l'appareil peut être immergé.

Cet anneau peut être surmoulé ou rapporté.

On a donc réalisé une étanchéité totale partant de l'extrémité de la terminaison 6 du câble jusqu'à l'enveloppe. Cette réalisation permet déjà, grâce à l'amélioration diélectrique du raccordement, d'utiliser des extrémités de câbles courtes simplifiées (sans apport d'ailettes supplémentaires), et donc plus économiques.

On notera également que la fixation du manchon pourra être réalisée par exemple par une pièce 16 vissée sur l'insert 1 et sur laquelle le manchon 9 vient se positionner lors de son montage.

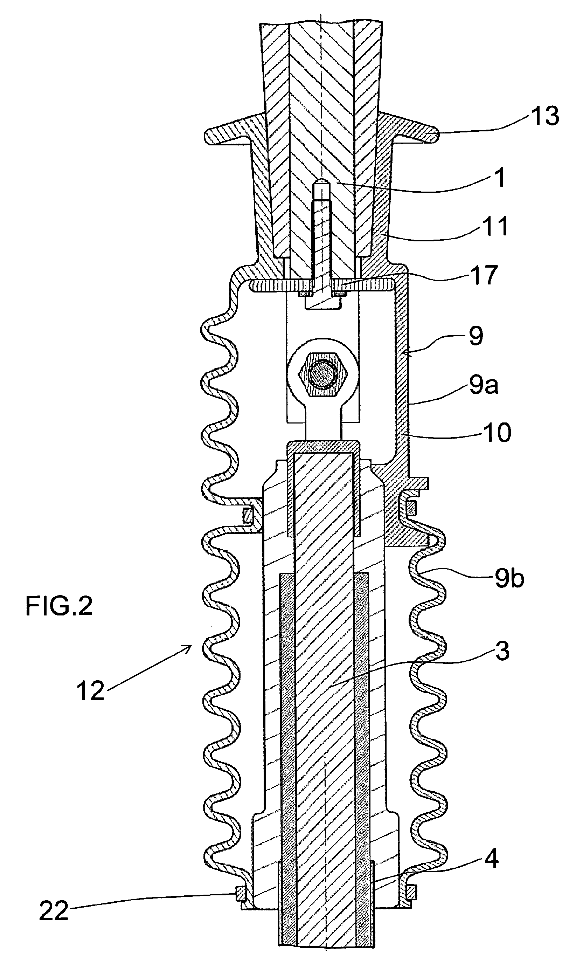

Sur la figure 2, ont été représentées deux réalisations différentes du dispositif de l'invention, dans lesquelles le manchon 9 est prolongé de manière à recouvrir la terminaison de câble. Selon la réalisation illustrée sur la partie gauche de la figure, le manchon 9 est réalisé en une seule partie, tandis que selon la seconde réalisation illustrée sur la partie droite, le manchon 9 est constitué par deux parties différentes 9a,9b fixées l'une à l'autre par frettage (partie gauche du dessin) ou encliquetage (partie droite du dessin). La première partie 9a comprend la première partie d'extrémité 11 et la partie principale 10 tandis que la seconde partie 9b forme une chaussette constituant un ajout protecteur de la terminaison qui permettra réellement de faire appel à des terminaisons plus courtes n'ayant pas à gérer d'importantes longueurs de lignes de fuite dans des ambiances climatiques sévères.

Selon la réalisation illustrée sur la figure 2, la seconde partie d'extrémité 12 ainsi que la partie principale 10 sont réalisées sous la forme d'un accordéon, ce qui permet une adaptation aisée du manchon à la longueur de la terminaison par extension du soufflet, et une augmentation des lignes de fuite externes à la manière d'ailettes d'isolateurs. Sur le côté droit, seule la seconde partie du manchon est réalisée sous cette forme, la première partie du manchon 9 pouvant être retournable.

La partie libre de la première partie d'extrémité 11 est conformée en poignée 13, comme ceci est le cas pour la figue 1.

La fixation du manchon 9 sur la traversée 2 est réalisée par l'intermédiaire d'une rondelle large conductrice 17 fixée à l'insert 1, qui permet aussi la mise au potentiel de la zone conductrice interne du manchon faisant office de déflecteur, comme ceci est également le cas pour la figure 1.

Au niveau de son extrémité libre, la chaussette ainsi crée par la seconde partie d'extrémité 12 peut être libre ou bien frettée 22 créant ainsi une deuxième étanchéité.

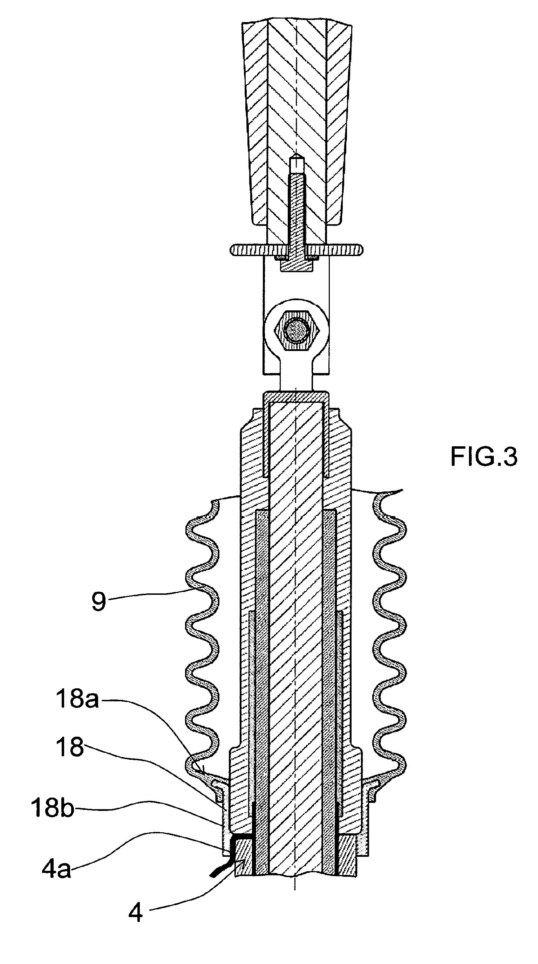

Selon la réalisation illustrée sur la figure 3, le manchon 9 est cette fois muni d'un déflecteur 18 en partie basse afin d'améliorer la tenue diélectrique de la terminaison, ce déflecteur permettant de réduire les concentrations de champ électrique présentes au niveau de l'arrêt du blindage. Ce déflecteur 18 est dans la réalisation décrite, surmoulé par le matériau isolant du manchon 9 à l'une de ses extrémités 18a, tandis que son autre extrémité 18b est mise en pression par extension sur la partie inférieure de la terminaison et sur la gaine de protection du câble ; ce qui permet par la mise en contact avec la tresse du câble une mise au potentiel de la terre. Ceci permet ainsi d'éviter l'apparition de décharges partielles dans le cas de l'utilisation de terminaisons courtes qui auraient été mal montées, d'où il résultera une fiabilité accrue du raccordement.

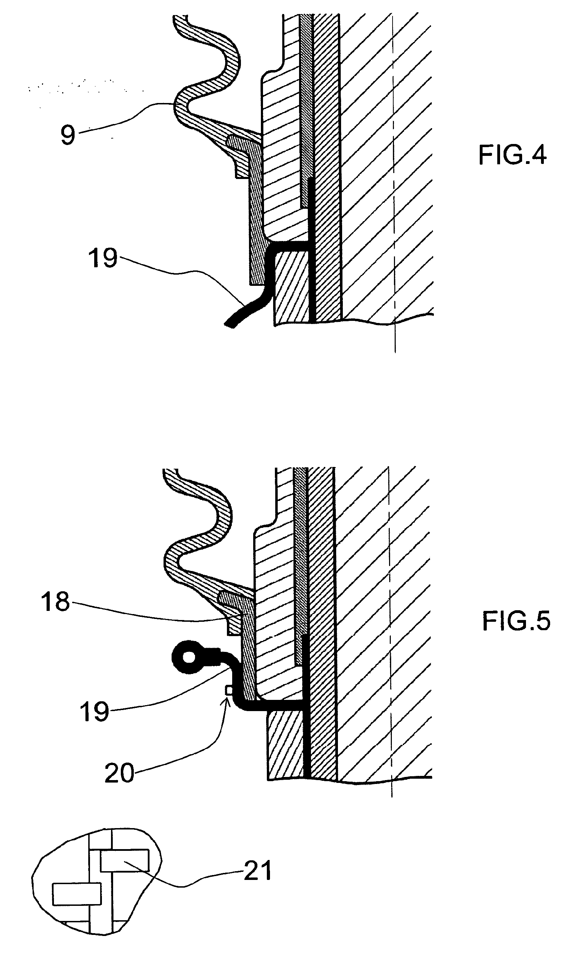

Selon la réalisation de la figure 4, la partie inférieure du manchon vient aplatir la tresse 19 assurant ainsi la mise au potentiel de son déflecteur inférieur.

Selon la réalisation illustrée sur la figure 5, le déflecteur 18 comporte un logement 20 à l'intérieur duquel la tresse 19 peut être fixée par un clip 21, ce qui représente un autre mode possible de mise au potentiel.

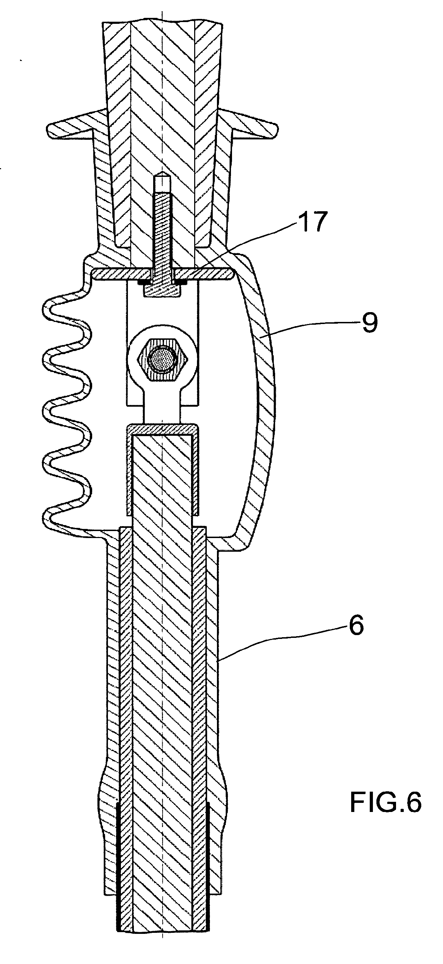

Selon la réalisation décrite sur la figure 6, la terminaison 6 et le manchon 9 forment une seule et même pièce.

Dans ce cas, on élimine les problèmes d'étanchéité entre le manchon et la terminaison, et on limite le nombre de pièces, d'où une fiabilité encore accrue.

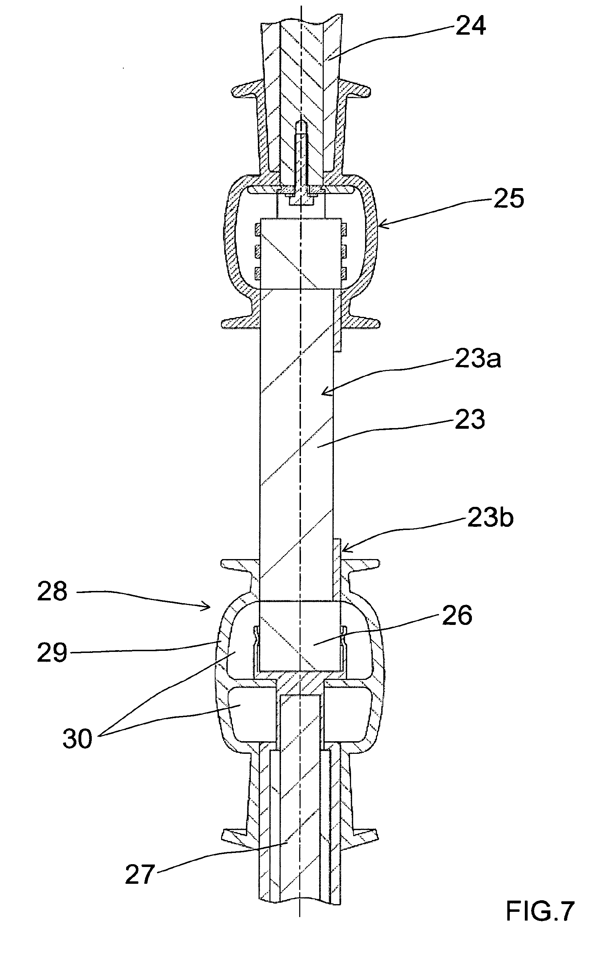

Selon la réalisation illustrée sur la figure 7, un fusible 23 est relié électriquement par l'une 23a de ses extrémités au conducteur 24 d'une traversée appartenant à l'enveloppe isolante d'un appareil électrique au moyen d'un premier dispositif de raccordement 25, et par son extrémité opposée 23b, à un deuxième dispositif de raccordement 26, lequel est relié en aval au câble 27 au moyen d'un dispositif de raccordement 28 selon l'invention, dont le manchon 29, présente dans cette forme particulière de réalisation, une double cavité 30. On notera qu'au niveau du premier dispositif de raccordement, le contact électrique est assuré par des pinces permettant un embrochage dans le plan horizontal, tandis qu'au niveau du second dispositif de raccordement, le contact électrique est assuré cette fois par des pinces dites « tulipes » permettant un embrochage dans le plan vertical.

La mise en place du dispositif de raccordement selon l'invention peut s'effectuer pour toutes les réalisations décrites des deux manières suivantes.

Les pièces 16 et/ou 17 sont préalablement fixées sur l'insert conducteur 1 de la traversée 2. Selon la première manière :
Tout d'abord, le manchon 9 est monté autour du câble 3. Puis, l'on introduit l'insert conducteur 1 de la traversée 2 à l'intérieur du manchon 9. Puis, l'on procède au raccordement électrique des conducteurs.

Ensuite, le manchon est mis en place (par enfilement, translation vers le haut) et encliqueté dans les logements constitués par les parties isolantes et les pièces 16 et/ou 17 fixées sur l'insert conducteur 1 de la traversée 2.

Le manchon 9 est ensuite positionné sur la traversée 2 en exerçant une traction sur l'élément de préhension 13 de manière à réaliser l'encliquetage du manchon 9 sur la rondelle 16,17.

Selon la deuxième manière de réaliser le raccordement:
Tout d'abord, le manchon 9 est mis en place avant le raccordement électrique des conducteurs. Puis, la seconde partie d'extrémité 12 du manchon ainsi que la partie principale 10 dudit manchon, sont soit retournées soit comprimées, selon le cas, ceci permettant de procéder au raccordement électrique des conducteurs.

Puis, cette seconde partie 12 est décomprimée ou bien retournée de manière à envelopper l'interface 8 et l'extrémité de la terminaison 6.

Lorsque le manchon 9 est en deux parties 9a,9b tel qu'illustré sur la figure 2, la deuxième partie 9b est d'abord mise en place sur le câble. Puis, après mise en place de la première partie 9a autour de l'interface 8, l'on procède au montage de la partie 9a tel que déctit précédemment. Puis, les deux parties du manchon sont fixées l'une à l'autre par encliquetage ou frettage.

La mise en place du dispositif selon les réalisations des figures 3 à 5 est la même que celle de la figure 2 et ne sera donc pas décrite de nouveau.

Concernant la figure 6, l'ensemble constitué par la terminaison et le manchon est préalablement installé sur le câble de manière identique à une terminaison classique. Ensuite, on procède au raccordement électrique de conducteurs, en libérant l'espace nécessaire, soit par retournement de la partie manchon cette fois effectuée vers le bas, soit dans le cas des formes compressibles (en accordéon) par compression de cette zone vers le bas.

On notera que la matière élastomère dans laquelle est réalisée le manchon de l'invention permet d'accepter une grande variation de diamètre tout en garantissant le contact terminaison-manchon assurant l'étanchéité. En cas de nécessité pour gérer une large plage de diamètres de câble ou de diamètres de fusibles, il est possible de prévoir plusieurs tailles de manchon pour la partie 12, ou bien de monter pour les plus petites tailles un manchon simplifié cylindrique formant entretoise.

Ainsi, dans toutes ces réalisations, la répartition du champ électrique est assurée par un écran conducteur 14a surmoulé d'un matériau en élastomère pouvant être utilisé en haute tension, préférentiellement des EPDM ou Silicone, oubien d'une peinture conductrice 14b mise au potentiel de la haute tension. Les raccordements au niveau du câble et de l'enveloppe sont rendus étanches grâce au manchon déformable en silicone. La déformation du manchon est réalisée lors de l'assemblage du dispositif, cette déformation permettant d'obtenir des efforts de serrage garantissant les bonnes étanchéités. Ces manchonnages permettent en améliorant l'étanchéité diélectrique de simplifier et fiabiliser les extrémités de câble en particulier dans des ambiances sévères. Cette étanchéité est telle qu'elle permet une immersion de l'appareillage jusqu'à cette zone de raccordement.

L'invention s'applique avantageusement à tout dispositif de raccordement d'un câble sur une traversée.

Bien entendu l'invention n'est pas limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont réalisées suivant son esprit.

## Revendications

1. Dispositif de raccordement électrique d'un conducteur électrique dit premier à un conducteur électrique dit second, ledit premier conducteur étant entouré au moins partiellement par une partie isolante, ledit dispositif comportant une interface de raccordement pour réaliser la connexion électrique entre le premier et le second conducteur précités, et un déflecteur placé autour de l'interface de raccordement précité et relié électriquement au conducteur dit premier,
**caractérisé en ce qu'**il comporte un manchon isolant (9) comportant une partie principale (10) placée autour de l'interface de raccordement (8), une partie d'extrémité (11), dite première, montée à étanchéité autour de la partie isolante du premier conducteur (1) et une partie d'extrémité (12), dite seconde, montée à étanchéité autour de l'extrémité du conducteur dit second (3), ladite partie principale (10) comportant sur au moins une partie de sa surface intérieure une portion conductrice (14a,14b) reliée électriquement audit premier conducteur (1), **en ce que** la seconde partie d'extrémité (12) seule du manchon (9), ou bien l'ensemble constitué par la partie principale (10) du manchon (9) et la seconde partie d'extrémité (12) du manchon, forme une partie retournable autour de la première partie d'extrémité (11) du manchon (9) et **en ce que** le manchon (9) comporte du côté du premier conducteur (1) une partie de préhension (13) apte à faciliter le montage du manchon (9) du côté du premier conducteur.

2. Dispositif de raccordement selon la revendication 1, **caractérisé en ce que** l'extrémité du conducteur dit second (3) est recouverte sur une certaine longueur d'une terminaison isolante (6) et **en ce que** la seconde partie d'extrémité précitée (12) du manchon (9) est montée à étanchéité autour de ladite terminaison (6).

3. Dispositif de raccordement selon la revendication 2, **caractérisé en ce que** l'extrémité libre de la seconde partie d'extrémité (12) est fixée par frettage sur ladite terminaison (6).

4. Dispositif de raccordement électrique selon la revendication 2 ou 3, **caractérisé en ce que** le conducteur dit second (3) comportant un écran de câble (4) relié à la masse et s'arrêtant à une certaine distance de l'extrémité dudit conducteur (3), la seconde partie d'extrémité (12) du manchon (9) se prolonge de manière à manchonner la terminaison (6) jusqu'à recouvrir en partie l'extrémité de l'écran de câble (4).

5. Dispositif de raccordement électrique selon l'une quelconque des revendications précédentes, **caractérisée en ce que** la portion conductrice précitée est réalisée au moyen d'une peinture conductrice (14b) placée sur au moins une partie de la surface intérieure de la partie principale (10) du manchon (9).

6. Dispositif de raccordement électrique selon l'une quelconque des revendications 1 à 4, **caractérisé en ce que** la portion conductrice précitée est réalisée au moyen d'un insert élastomère conducteur (14a) surmoulé par la matière isolante du manchon (9).

7. Dispositif de raccordement selon l'une quelconque des revendications précédentes, **caractérisé en ce que** la partie principale (10) et/ou la seconde partie d'extrémité (12) du manchon comporte des ailettes aptes à augmenter la ligne de fuite entre les parties sous tension et les parties à la masse.

8. Dispositif de raccordement selon l'une quelconque des revendications précédentes, **caractérisé en ce que** la partie principale (10) et /ou la seconde partie d'extrémité (12) du manchon (9), comporte au moins une partie formée en accordéon, de manière à permettre une adaptation aisée du manchon (9) par extension du soufflet à la longueur souhaitée de recouvrement du second conducteur (3) ou à la longueur d'une terminaison isolante (6) placée autour dudit conducteur (3).

9. Dispositif de raccordement selon l'une quelconque des revendications précédentes, **caractérisé en ce que** le manchon (9) est réalisé en une seule pièce.

10. Dispositif de raccordement selon l'une quelconque des revendications 1 à 9, **caractérisé en ce que** le manchon précité (9) est réalisé en deux pièces (9a,9b) comprenant une première pièce (9a) comportant la partie principale (10) et la première partie d'extrémité (11) du manchon, et la seconde pièce (9b) comportant la seconde partie d'extrémité (12) du manchon (9).

11. Dispositif de raccordement selon la revendication 10, **caractérisé en ce que** la seconde pièce (9b) est fixée à la première (9a) par des moyens d'encliquetage ou de frettage de manière à augmenter l'étanchéité entre ces deux parties et entre le manchon et le câble.

12. Dispositif de raccordement selon l'une quelconque des revendications précédentes, **caractérisé en ce qu'**il comporte une rondelle (16,17) solidaire du conducteur dit premier (1), ladite rondelle (17) reliant électriquement la partie conductrice (14) du manchon (9) et ledit conducteur (1) dit premier, et étant apte à permettre l'encliquetage du manchon (9) lors du montage de ce manchon (9) sur le conducteur dit premier (1).

13. Dispositif de raccordement selon l'une quelconque des revendications précédentes, le conducteur dit second (3) comportant un écran de câble (4) relié à la masse et s'arrêtant à une certaine distance de l'extrémité dudit conducteur (3), **caractérisé en ce que** le dispositif comporte également un déflecteur (18) fixé par l'une (18a) de ses extrémités à l'extrémité libre de la seconde partie d'extrémité précitée (9b) du manchon (9) par surmoulage, et s'appuie par son extrémité opposée (18), sur la gaine (4a) de l'écran de câble précité (4).

14. Dispositif de raccordement selon l'une quelconque des revendications précédentes, **caractérisé en ce que** l'extrémité du conducteur dit second (3) est recouverte sur une certaine longueur d'une terminaison isolante (6), et **en ce que** le manchon (9) et la terminaison (6) sont constituées d'une seule et même pièce.

15. Dispositif de raccordement selon l'une quelconque des revendications précédentes, **caractérisé en ce que** le premier conducteur (1) est celui d'une traversée appartenant à l'enveloppe isolante d'un appareil électrique de coupure et le second conducteur (3) est celui d'un câble.

16. Dispositif de raccordement selon l'une quelconque des revendications 1 à 15, **caractérisé en ce que** le premier conducteur (1) est celui d'une extrémité d'un fusible et le second conducteur (3) est celui d'un câble ou d'un fusible.

17. Dispositif de raccordement **caractérisé en ce qu'**il comporte un premier dispositif de raccordement selon l'une quelconque des revendications 1 à 16, dans lequel le premier conducteur (1) est celui d'une traversée et le second conducteur (3) est celui d'une extrémité d'un fusible, et un second dispositif de raccordement selon l'une quelconque des revendications 1 à 17, **caractérisé en ce que** le premier conducteur (1) est celui de l'autre extrémité du fusible et le second conducteur (3) est celui d'un câble.
